# EUROPÄISCHE PATENTSCHRIFT

(11) **EP 2 999 101 B1**
(45) Veröffentlichungstag und Bekanntmachung des Hinweises auf die Patenterteilung: **06.12.2017**
(21) Anmeldenummer: 15002495.8
(22) Anmeldetag: 22.08.2015
(51) Int. Cl.: H02K 17/16, H02K 15/00

(54) **KURZSCHLUSSLÄUFER**
BYPASS ROTOR
ROTOR EN COURT-CIRCUIT

(30) Priorität: 17.09.2014 DE 102014013684
(43) Veröffentlichungstag der Anmeldung: 23.03.2016
(73) Patentinhaber: Wieland-Werke AG, 89079 Ulm (DE)
(72) Erfinder: Voggeser, Volker, 89250 Senden (DE); Thumm, Gerhard, 89155 Erbach (DE)

(56) Entgegenhaltungen:
- DE-T2- 69 604 099
- US-A1- 2012 217 839

## Beschreibung

Die Erfindung betrifft einen Kurzschlussläufer für eine Asynchronmaschine mit mindestens einem Läuferblechpaket, das eine Vielzahl von Aussparungen aufweist, und mit mindestens einem Läuferkäfig aus elektrisch leitenden Läuferstäben, die in die Aussparungen des Läuferblechpakets so eingebracht sind, dass die Läuferstäbe an ihren beiden Endbereichen einen Überstand über das Läuferblechpaket aufweisen, und aus stirnseitig an das Läuferblechpaket angebrachten Kurzschlussringen mit einer Vielzahl im Bereich ihres äußeren Umfangs angeordneter Ausnehmungen, in die die Endbereiche der Läuferstäbe hineinragen.

Der grundsätzliche Aufbau von Kurzschlussläufern für Asynchronmaschinen ist aus dem Stand der Technik allgemein bekannt. Zur Herstellung des Läuferkäfigs sind verschiedene Methoden bekannt. In einigen Fällen wird der gesamte Läuferkäfig einstückig gegossen. In Abwandlung davon gibt es Ausführungen, bei denen die Läuferstäbe aus Halbzeug hergestellt und in die Aussparungen des Läuferblechpakets eingeschoben werden. Anschließend werden die Kurzschlussringe angegossen. Eine weitere Variante sieht demgegenüber vor, die Kurzschlussringe aus entsprechend geformten Blechen herzustellen. Die Bleche müssen elektrisch gut leitend und zuverlässig mit den Läuferstäben verbunden werden. Dies erfolgt in vielen Fällen durch einen Lötprozess, wie beispielsweise der Druckschrift DE 34 21 537 A1 entnommen werden kann.

Des Weiteren sind der DE 195 42 962 C1 Kurzschlussläufer zu entnehmen, bei denen die Kurzschlussringe aus abwechselnd zueinander positionierten Kupfer- und Stahlblechen aufgebaut sind. Dadurch soll die mechanische Stabilität des Kurzschlussrings verbessert werden und die eingelegten Stahlbleche sollen eine Weitung des Kurzschlussrings auch bei höheren Drehzahlen einschränken. Die Stahlbleche werden mit den Kupferblechen und den Leiterstäben verlötet.

Aus der US 2012/217839 A1 sind Kurzschlussläufer bekannt, bei denen stirnseitig Endringpakete vorgesehen sind, die jeweils aus einem Kurzschlussring und einem oder zwei Verstärkungsringen zusammengesetzt sind. Die Kurzschlussringe sind aus einem Kupferwerkstoff, die Verstärkungsringe aus einem Werkstoff mit größerer Festigkeit. Kurzschlussring und Verstärkungsringe werden einzeln und nacheinander so angebracht, dass jeweils werkstoffverschiedene Ringe benachbart sind.

In der Druckschrift DE 697 34 839 T2 wird vorgeschlagen, die Kurzschlussringe eines Käfigläufers aus einem Bimetallblech, insbesondere einem Stahl-Kupferblech herzustellen. Derart hergestellte Bimetall-Kurzschlussringe werden dann mit ihrer Stahlseite zum Läuferblechpaket hin orientiert positioniert, so dass anschließend der Kurzschlussring mit dem Läuferblechpaket verschweißt werden kann.

Der Erfindung liegt die Aufgabe zugrunde, einen verbesserten Kurzschlussläufer für eine Asynchronmaschine anzugeben. Die Verbesserung betrifft dabei den Aufbau der Kurzschlussringe und deren Verbindung mit den Läuferstäben.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt einen Kurzschlussläufer für eine Asynchronmaschine mit mindestens einem Läuferblechpaket und mit mindestens einem Läuferkäfig aus elektrisch leitenden Läuferstäben und Kurzschlussringen ein. Das Läuferblechpaket weist eine Vielzahl von Aussparungen auf. Die Aussparungen können dabei als in Radialrichtung nach außen offene Nuten ausgebildet sein. Die Läuferstäbe sind so in die Aussparungen des Läuferblechpakets eingebracht, dass sie an ihren beiden Endbereichen einen Überstand über das Läuferblechpaket aufweisen. An den Stirnseiten des Läuferblechpakets sind Kurzschlussringe mit einer Vielzahl im Bereich ihres äußeren Umfangs angeordneter Ausnehmungen angebracht, in die die Endbereiche der Läuferstäbe hineinragen. Die Ausnehmungen können dabei als Durchgangsöffnungen ausgebildet sein, die in Radialrichtung nach außen offen oder geschlossen sind. Erfindungsgemäß bestehen die Kurzschlussringe jeweils aus mindestens zwei Metallverbundscheiben, welche ihrerseits mindestens aus einer ersten Metallscheibe und einer durch Plattieren mit dieser flächig verbundenen, werkstoffverschiedenen zweiten Metallscheibe bestehen. Dabei sind benachbarte Metallverbundscheiben zumindest teilweise so angeordnet, dass erste Metallscheiben dieser Metallverbundscheiben einander zugewandt sind. Die Läuferstäbe sind mit den ersten Metallscheiben im Bereich der Ausnehmungen stoffschlüssig verbunden, bevorzugt verschweißt.

Die Erfindung geht dabei von der Überlegung aus, dass die Kurzschlussringe des Läuferkäfigs jeweils aus mehreren Metallverbundscheiben aufgebaut sind. Die Metallverbundscheiben bestehen dabei mindestens aus zwei werkstoffverschiedenen Metallscheiben, die flächig und elektrisch leitend miteinander verbunden sind. Die Werkstoffe der Metallscheiben unterscheiden sich hinsichtlich ihrer Dichte, elektrischen Leitfähigkeit, Festigkeitseigenschaften und ihrer Kosten. Damit bieten Metallverbundscheiben im Unterschied zu Monometallscheiben mehr Freiheitsgrade, die Kurzschlussringe hinsichtlich elektrischem Leitwert, Gewicht, Festigkeit und Kosten zu optimieren. Die Auswahl der miteinander kombinierten Werkstoffe und die Dickenverhältnisse der einzelnen Metallscheiben spielen dabei eine wichtige Rolle. Die Metallverbundscheiben müssen mit den Läuferstäben an deren Endbereichen elektrisch gut leitend verbunden sein. Die Verbindung muss zuverlässig sein und darf während der gesamten Lebensdauer der Maschine auch unter Einwirkung von Kräften, wie sie beim Betrieb von schnell rotierenden Bauteilen auftreten können, nicht versagen. Deshalb erfolgt die Verbindung zwischen den Läuferstäben und den Metallverbundscheiben stoffschlüssig, beispielsweise durch Löten oder bevorzugt durch Schweißen. Da das stoffschlüssige Verbinden unterschiedlicher metallischer Werkstoffe schwierig ist, wird die Verbindungstechnik zwischen Läuferstäben und Kurzschlussringen so gewählt, dass im Wesentlichen nur diejenige Metallscheibe einer Metallverbundscheibe mit den Läuferstäben verbunden wird, deren Werkstoff sich am besten mit dem Material der Läuferstäbe verbinden lässt. Im Rahmen dieser Erfindung wird diese Metallscheibe als ,erste Metallscheibe' bezeichnet, während eine hierzu werkstoffverschiedene Metallscheibe als 'zweite Metallscheibe' bezeichnet wird. Der Übergang des Stroms von den Leiterstäben auf eine Metallverbundscheibe erfolgt über die stoffschlüssige Verbindungen zunächst auf die erste Metallscheibe. Der flächige Verbund der Metallscheiben untereinander ermöglicht dann den Stromtransport innerhalb der Metallverbundscheibe mit minimalem elektrischem Widerstand. Gemäß der Erfindung sind die Metallverbundscheiben der Kurzschlussringe zumindest teilweise so angeordnet, dass erste Metallscheiben benachbarter Metallverbundscheiben einander zugewandt sind. Dadurch sind werkstoffgleiche, erste Metallscheiben benachbarter Metallverbundscheiben unmittelbar nebeneinander positioniert. Dies wird bei Metallverbundscheiben, die aus zwei Metallscheiben bestehen, dadurch erreicht, dass benachbarte Metallverbundscheiben bezüglich ihrer Scheibenanordnung spiegelverkehrt zueinander orientiert sind. Alternativ sind Lösungen mit Multilayer-Metallverbundscheiben möglich.

Der besondere Vorteil eines solchen Aufbaus der Kurzschlussringe besteht darin, dass zwei benachbarte Metallverbundscheiben durch einen einzigen Verbindungsprozess, beispielsweise durch einen einzigen Schweißvorgang, mit einem Läuferstab verbunden werden können. Damit können Aufwand und Kosten für das Verbinden der Kurzschlussringe mit den Läuferstäben nahezu halbiert werden. Ferner kann ohne Zusatzaufwand eine zuverlässige Verbindung zwischen zwei benachbarten Metallverbundscheiben hergestellt werden. Dies verbessert den elektrischen Leitwert des Kurzschlussrings und erhöht seine mechanische Stabilität.

In bevorzugter Ausgestaltung der Erfindung können die Läuferstäbe zumindest teilweise aus einem Werkstoff bestehen, der gut mit dem Werkstoff der ersten Metallscheiben verschweißbar ist. Durch Schweißen lassen sich besonders zuverlässige Verbindungen herstellen. Geeignete Verbindungsverfahren sind beispielsweise Laserschweißen oder Elektronenstrahlschweißen. Die beiden Werkstoffe, die miteinander verschweißt werden, haben bevorzugt nahe beieinander liegende Schmelztemperaturen beziehungsweise Schmelzbereiche sowie ähnliche thermische Leitfähigkeiten. Der Unterschied der Schmelztemperaturen beziehungsweise Schmelzbereiche beträgt bevorzugt maximal 20 K.

In besonders bevorzugter Ausgestaltung der Erfindung können die Läuferstäbe zumindest teilweise aus einem Werkstoff bestehen, dessen Grundwerkstoff gleich dem Grundwerkstoff der ersten Metallscheiben ist. Die beiden Werkstoffe, die miteinander verschweißt werden, können also unterschiedliche Legierungen des gleichen Grundwerkstoffs sein. Aufgrund des gleichen Grundwerkstoffs sind die beiden Legierungen in vielen Fällen gut schweißbar. Durch geeignete Legierungselemente können insbesondere die Leitfähigkeit und die Festigkeit eines Werkstoffs gezielt beeinflusst werden. So können beispielsweise die Leiterstäbe bevorzugt aus einer Legierung mit besonders hoher Festigkeit gefertigt sein, während für die ersten Metallscheiben der Kurzschlussringe eine Legierung mit besonders hoher Leitfähigkeit verwendet wird.

Gemäß der Erfindung sind die werkstoffverschiedenen Metallscheiben einer Metallverbundscheibe durch Plattieren flächig miteinander verbunden. Plattieren ist ein besonders geeignetes Verfahren, unterschiedliche metallische Werkstoffe, die in Band- oder Blechform vorliegen, flächig miteinander zu verbinden. Eine besonders geeignetes Verfahren hierfür ist Laserwalzplattieren. Durch Plattierverfahren lassen sich günstig Halbzeuge aus Metallverbunden herstellen, beispielsweise Bimetallbänder. Aus solchen Halbzeugen können durch geeignete Trennverfahren, beispielsweise Stanzen oder Laserschneiden, Metallverbundscheiben herausgearbeitet werden, die zum Aufbau eines erfindungsgemäßen Kurzschlussläufers benötigt werden.

Bei einer vorteilhaften Ausführungsform der Erfindung können erste Metallscheiben an ihrem Außenumfang mindestens eine Fase aufweisen. Bevorzugt erstreckt sich diese Fase in Radialrichtung zumindest bis zu den Ausnehmungen. Durch eine derartige Fase wird eine für die Verbindung mit den Leiterstäben günstige Geometrie der ersten Metallscheibe realisiert. Durch die Fase entsteht eine Art umlaufende Nut, durch die die Verbindungsstelle zwischen erster Metallscheibe und Leiterstab zugänglich wird. Im Fall eines Lötprozesses kann das Lötmaterial in die Nut eingebracht und so an die Verbindungsstelle herangeführt werden. Im Fall einer Schweißverbindung kann durch die Nut die Energiezufuhr, beispielsweise durch eine Flamme oder einen Laser- oder Elektronenstrahl, an die Schweißstelle realisiert werden.

In vorteilhafter Ausgestaltung der Erfindung können die ersten Metallscheiben, also die Metallscheiben, die mit den Leiterstäben stoffschlüssig verbunden sind, aus Aluminium oder einer Aluminiumlegierung bestehen. Dem entsprechend ist es vorteilhaft, wenn die Leiterstäbe zumindest teilweise aus Aluminium oder einer Aluminiumlegierung bestehen. Aluminium und Aluminiumlegierungen sind aufgrund ihrer geringen Dichte und ihrer relativ guten elektrischen Leitfähigkeit bevorzugte Werkstoffe für Leiterstäbe und Kurzschlussringe eines Käfigläufers. Um bei dieser vorteilhaften Ausführungsform der Erfindung den elektrischen Leitwert der Kurzschlussringe zu verbessern, können die zweiten Metallscheiben der Metallverbundscheiben bevorzugt in Kupfer oder einer Kupferlegierung ausgeführt werden. Dadurch ergibt sich ein günstiger Kompromiss aus elektrischem Leitwert und Gewicht. In einer besonders vorteilhaften Ausgestaltung der Erfindung kann dabei die Dicke s₁ der ersten Metallscheiben mindestens 60 % der Dicke s der Metallverbundscheiben betragen. Die ersten Metallscheiben sind dabei in Aluminium oder einer Aluminiumlegierung ausgeführt. Aluminium zeichnet sich gegenüber anderen metallischen Werkstoffen durch eine sehr geringe Dichte und einen volumenbezogen günstigen Preis aus. Bestehen die Metallverbundscheiben zu mindestens 60 % aus Aluminium oder einer Aluminiumlegierung, dann zeichnen sie sich durch ein niedriges Gewicht und geringe Kosten aus.

Bei einer alternativen vorteilhaften Ausgestaltung der Erfindung können die ersten Metallscheiben, also die Metallscheiben, die mit den Leiterstäben stoffschlüssig verbunden sind, aus Kupfer oder einer Kupferlegierung bestehen. Dem entsprechend ist es vorteilhaft, wenn die Leiterstäbe zumindest teilweise aus Kupfer oder einer Kupferlegierung bestehen. Kupfer und Kupferlegierungen sind aufgrund ihrer hohen elektrischen Leitfähigkeit bevorzugte Werkstoffe für Leiterstäbe und Kurzschlussringe eines Käfigläufers. Um bei dieser vorteilhaften Ausführungsform der Erfindung das Gewicht und die Kosten der Kurzschlussringe zu reduzieren, können die zweiten Metallscheiben der Metallverbundscheiben bevorzugt in Aluminium oder einer Aluminiumlegierung ausgeführt werden. Dadurch ergibt sich ein günstiger Kompromiss aus elektrischem Leitwert, Gewicht und Kosten.

Die Erfindung wird anhand der folgenden Ausführungsbeispiele sowie anhand der schematischen Zeichnungen näher erläutert. Darin zeigen:
- Fig. 1: eine Schnittansicht eines erfindungsgemäßen Kurzschlussläufers
- Fig. 2: einen vergrößerten Ausschnitt von Fig. 1 im Bereich der Verbindung zwischen einem Läuferstab und einem Kurzschlussring
- Fig. 3: einen vergrößerten Ausschnitt einer weiteren Ausführungsform eines erfindungsgemäßen Kurzschlussläufers im Bereich der Verbindung zwischen einem Läuferstab und einem Kurzschlussring

Einander entsprechende Teile sind in allen Figuren mit denselben Bezugszeichen versehen.

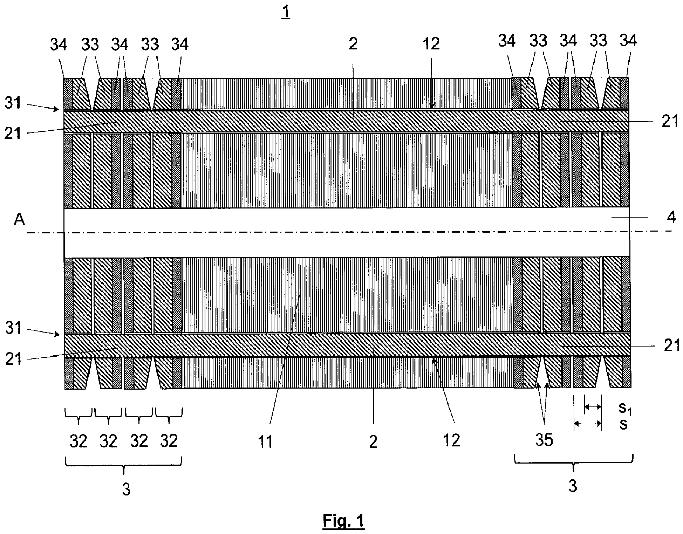

Fig. 1 zeigt eine Schnittansicht eines erfindungsgemäßen Kurzschlussläufers 1. Der Kurzschlussläufer 1 besitzt eine im Wesentlichen zylindrische Gestalt mit einer Achse A und einer zentral angeordneten Bohrung 4 zur Aufnahme einer nicht dargestellten Welle. Er weist ein Läuferblechpaket 11 auf, das in an sich bekannter Weise aus einzelnen Blechen aufgebaut ist. Das Läuferblechpaket 11 weist eine Vielzahl von Aussparungen 12 auf, von denen zwei in der Schnittansicht sichtbar sind. Ferner weist der Kurzschlussläufer 1 eine Vielzahl von elektrisch leitenden Läuferstäben 2, von denen zwei in der Schnittansicht sichtbar sind, sowie zwei Kurzschlussringe 3 auf. Läuferstäbe 2 und Kurzschlussringe 3 bilden zusammen im Wesentlichen den Läuferkäfig. Die Läuferstäbe 2 sind so in die Aussparungen 12 des Läuferblechpakets 11 eingebracht, dass sie jeweils an ihren beiden Endbereichen 21 einen Überstand über das Läuferblechpaket 11 aufweisen. Üblicherweise sind die Läuferstäbe 2 nicht parallel zur Achse A des Käfigläufers 1 ausgerichtet, sondern sie sind um einen bestimmten Drallwinkel gegenüber der Achse A geneigt angeordnet. Auf dieses Merkmal wird jedoch aus Gründen der Übersichtlichkeit in der schematischen Darstellung der Fig. 1 verzichtet. Die Läuferstäbe 2 sind in dem dargestellten Ausführungsbeispiel als massive Monometallstäbe ausgeführt. Es ist jedoch auch möglich, Bimetallstäbe und/oder Hohlstäbe zu verwenden. Die Kurzschlussringe 3 sind an den Stirnseiten des Läuferblechpakets 11 angebracht. Die Kurzschlussringe 3 weisen im Bereich ihres äußeren Umfangs eine Vielzahl von Ausnehmungen 31 auf. Anzahl und Position der Ausnehmungen 31 sind so gewählt, dass diese mit den Aussparungen 12 des Läuferblechpakets 11 zur Deckung gebracht werden können. Die Endbereiche 21 der Läuferstäbe 2 ragen in die Ausnehmungen 31 der Kurzschlussringe 3 hinein.

Erfindungsgemäß bestehen die Kurzschlussringe 3 jeweils aus vier Metallverbundscheiben 32, welche ihrerseits jeweils aus einer ersten Metallscheibe 33 und einer mit dieser flächig verbundenen, werkstoffverschiedenen zweiten Metallscheibe 34 bestehen. Dabei sind jeweils zwei benachbarte Metallverbundscheiben 32 so angeordnet, dass werkstoffgleiche erste 33 oder zweite 34 Metallscheiben einander zugewandt sind. Zählt man für jeden der beiden Kurzschlussringe 3 die Metallverbundscheiben 32 beginnend an der Stirnseite des Läuferblechpakets durch, dann sind jeweils die zweiten und vierten Metallverbundscheiben 32 spiegelverkehrt zur ersten und dritten Metallverbundschiebe 32 orientiert. Folglich sind jeweils zwischen der ersten und zweiten sowie zwischen der dritten und vierten Metallverbundscheibe 32 werkstoffgleiche erste Metallscheiben 33 einander zugewandt. Ebenso sind jeweils zwischen der zweiten und dritten Metallverbundscheibe 32 werkstoffgleiche zweite Metallscheiben 34 einander zugewandt. In der schematischen Darstellung der Fig. 1 sind benachbarte Metallverbundscheiben 32 aus Gründen der Übersichtlichkeit jeweils geringfügig beabstandet dargestellt. In Realität sind die Metallverbundscheiben 32 üblicherweise ohne Abstand zueinander positioniert. Ferner ist es möglich, dass zwischen dem Läuferblechpaket 11 und den beiden Metallverbundscheiben 32, die unmittelbar benachbart zum Läuferblechpaket 11 positioniert sind, ein Abstand vorgesehen ist. Die ersten Metallscheiben 33 weisen an ihrem äußeren Umfang eine umlaufende Fase 35 auf, welche sich in Radialrichtung bis zu den Ausnehmungen 31 der Kurzschlussringe 3 erstreckt.

Durch die gleiche Schraffur der Elemente, die in den Fig. 1, 2 und 3 die Läuferstäbe 2 beziehungsweise die ersten Metallscheiben 33 darstellen, soll verdeutlicht werden, dass die Läuferstäbe 2 und die ersten Metallscheiben 33 bevorzugt aus gleichen oder zueinander ähnlichen Werkstoffen bestehen. Besonders bevorzugt bestehen die Läuferstäbe 2 und die ersten Metallscheiben 33 aus Aluminium oder einer Aluminiumlegierung. Wie in Fig. 1 darstellt beträgt in diesem Fall die Dicke s₁ der ersten Metallscheiben 33 mindestens 60 % der gesamten Dicke s der Metallverbundscheibe 32. Bei einer alternativen Ausführungsform können die Läuferstäbe 2 und die ersten Metallscheiben 33 aus Kupfer oder einer Kupferlegierung bestehen.

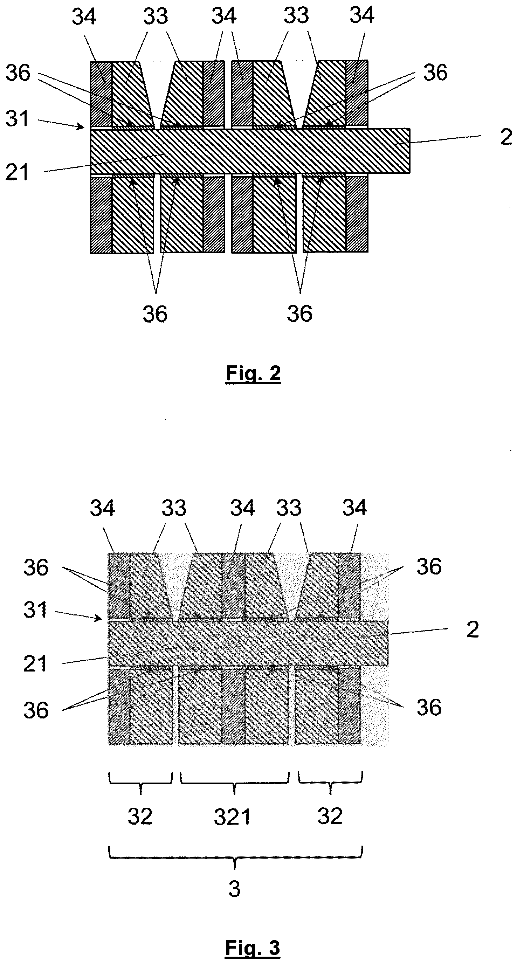

Die Läuferstäbe 21 sind mit den ersten Metallscheiben 33 im Bereich der Ausnehmungen 31 stoffschlüssig verbunden, bevorzugt verschweißt. Dies wird im Zusammenhang mit der Fig. 2 näher erläutert.

Fig. 2 zeigt einen vergrößerten Ausschnitt von Fig. 1 im Bereich der Verbindung zwischen einem Läuferstab 2 und den ersten Metallscheiben 33 eines Kurzschlussrings. Zwischen den ersten Metallscheiben 33 und dem Endbereich 21 des hier verkürzt dargestellten Läuferstabs 2 besteht jeweils eine stoffschlüssige Verbindung 36 im Bereich der Ausnehmungen 31. Im Fall einer Lötverbindung kann die Verbindung 36 ein Lotmaterial sein, das einen Lötspalt ausfüllt. Im Fall einer Schweißverbindung kann die Verbindung 36 durch aufgeschmolzenes Material der miteinander verbundenen Partner oder durch einen Schweißzusatzwerkstoff gebildet sein. Zwischen den zweiten Metallscheiben 34 und dem Läuferstab 2 besteht keine stoffschlüssige Verbindung, was in Fig. 2 jeweils durch einen Spalt zwischen diesen Bauteilen dargestellt wird.

Fig. 3 zeigt einen vergrößerten Ausschnitt einer weiteren Ausführungsform eines erfindungsgemäßen Kurzschlussläufers 1 im Bereich der Verbindung zwischen einem Läuferstab 2 und einem Kurzschlussring 3. Bei dieser Ausführungsform besteht der Kurzschlussring 3 aus zwei zueinander spiegelverkehrt angeordneten Metallverbundscheiben 32, die jeweils aus einer ersten 33 und einer zweiten 34 Metallscheibe bestehen, sowie einer dazwischen positionierten Metallverbundscheibe 321, die aus zwei ersten 33 und einer zwischen diesen angeordneten zweiten 34 Metallscheibe besteht. Zwischen den ersten Metallscheiben 33 der Metallverbundscheiben 32 und 321 und dem Endbereich 21 des hier verkürzt dargestellten Läuferstabs 2 besteht jeweils eine stoffschlüssige Verbindung 36 im Bereich der Ausnehmungen 31. Zwar ist die Herstellung von Metallverbundscheiben 321, die aus mehr als zwei Metallscheiben 33, 34 bestehen, aufwändiger als die Herstellung von reinen Bimetallscheiben, jedoch wird durch die Verwendung solcher Multilayer-Metallverbundscheiben 321 der Montageaufwand für den Kurzschlussring 3 deutlich reduziert. Die Ausführungsform gemäß Fig. 3 kann dahingehend modifiziert werden, dass mehr als eine Metallverbundscheibe 321, die aus zwei ersten 33 und einer zwischen diesen angeordneten zweiten 34 Metallscheibe besteht, verwendet wird.

### Bezugszeichenliste

- 1: Kurzschlussläufer
- 11: Läuferblechpaket
- 12: Aussparung
- 2: Läuferstab
- 21: Endbereich
- 3: Kurzschlussring
- 31: Ausnehmung
- 32: Metallverbundscheibe
- 321: Metallverbundscheibe
- 33: erste Metallscheibe
- 34: zweite Metallscheibe
- 35: Fase
- 36: Verbindung
- 4: Bohrung

- A: Achse
- s: Dicke einer Metallverbundscheibe
- s₁: Dicke der ersten Metallscheibe

## Patentansprüche

1. Kurzschlussläufer (1) für eine Asynchronmaschine mit mindestens einem Läuferblechpaket (11), das eine Vielzahl von Aussparungen (12) aufweist, und mit mindestens einem Läuferkäfig aus elektrisch leitenden Läuferstäben (2), die in die Aussparungen (12) des Läuferblechpakets (11) so eingebracht sind, dass die Läuferstäbe (2) an ihren beiden Endbereichen (21) einen Überstand über das Läuferblechpaket (11) aufweisen, und aus stirnseitig an das Läuferblechpaket (11) angebrachten Kurzschlussringen (3) mit einer Vielzahl im Bereich ihres äußeren Umfangs angeordneter Ausnehmungen (31), in die die Endbereiche (21) der Läuferstäbe (2) hineinragen, wobei die Kurzschlussringe (3) jeweils aus mindestens zwei Metallverbundscheiben (32, 321) bestehen, welche mindestens aus einer ersten Metallscheibe (33) und einer durch Plattieren mit dieser flächig verbundenen, werkstoffverschiedenen zweiten Metallscheibe (34) bestehen, wobei benachbarte Metallverbundscheiben (32, 321) zumindest teilweise so angeordnet sind, dass erste Metallscheiben (33) einander zugewandt sind und wobei die Läuferstäbe (2) mit den ersten Metallscheiben (33) im Bereich der Ausnehmungen (31) stoffschlüssig verbunden sind.

2. Kurzschlussläufer (1) gemäß Anspruch 1, **dadurch gekennzeichnet,**
**dass** die Läuferstäbe (2) zumindest teilweise aus einem Werkstoff bestehen, der gut mit dem Werkstoff der ersten Metallscheiben (33) verschweißbar ist.

3. Kurzschlussläufer (1) gemäß Anspruch 2, **dadurch gekennzeichnet,**
**dass** die Läuferstäbe (2) zumindest teilweise aus einem Werkstoff bestehen, dessen Grundwerkstoff gleich dem Grundwerkstoff der ersten Metallscheiben (33) ist.

4. Kurzschlussläufer (1) gemäß einem der Ansprüche 1 bis 3, **dadurch gekennzeichnet,**
**dass** erste Metallscheiben (33) an ihrem Außenumfang mindestens eine Fase (35) aufweisen.

5. Kurzschlussläufer (1) gemäß einem der Ansprüche 1 bis 4, **dadurch gekennzeichnet,**
**dass** die ersten Metallscheiben (33) aus Aluminium oder einer Aluminiumlegierung bestehen.

6. Kurzschlussläufer (1) gemäß Anspruch 5, **dadurch gekennzeichnet,**
**dass** die Dicke s₁ der ersten Metallscheiben (33) mindestens 60 % der Dicke s der Metallverbundscheiben (32) beträgt.

7. Kurzschlussläufer (1) gemäß einem der Ansprüche 1 bis 4, **dadurch gekennzeichnet,**
**dass** die ersten Metallscheiben (33) aus Kupfer oder einer Kupferlegierung bestehen.

## Claims

1. Squirrel-cage rotor (1) for an asynchronous machine having at least one rotor plate assembly (11) which has a large number of recesses (12), and having at least one rotor cage comprising electrically conductive rotor rods (2) which are introduced into the recesses (12) of the rotor plate assembly (11) so that the rotor rods (2) have a projection at the two end regions (21) thereof beyond the rotor plate assembly (11), and comprising short-circuit rings (3) which are fitted at the front side to the rotor plate assembly (11) and which have a large number of recesses (31) which are arranged in the region of the outer periphery thereof and in which the end regions (21) of the rotor rods (2) project, wherein the short-circuit rings (3) each comprise at least two metal composite discs (32, 321) which comprise at least a first metal disc (33) and a second metal disc (34) which is connected thereto in a planar manner by plating and which comprises a different material,
wherein adjacent metal composite discs (32, 321) are arranged at least partially in such a manner that first metal discs (33) face each other and wherein the rotor rods (2) are connected to the first metal discs (33) in the region of the recesses (31) in a materially engaging manner.

2. Squirrel-cage rotor (1) according to claim 1,
**characterised in that** the rotor rods (2) at least partially comprise a material which can be readily welded to the material of the first metal discs (33).

3. Squirrel-cage rotor (1) according to claim 2, **characterised in that** the rotor rods (2) at least partially comprise a material, the base material of which is identical to the base material of the first metal discs (33).

4. Squirrel-cage rotor (1) according to any one of claims 1 to 3, **characterised in that** first metal discs (33) have at the outer periphery thereof at least one chamfer (35).

5. Squirrel-cage rotor (1) according to any one of claims 1 to 4, **characterised in that** the first metal discs (33) comprise aluminium or an aluminium alloy.

6. Squirrel-cage rotor (1) according to claim 5, **characterised in that** the thickness s₁ of the first metal discs (33) is at least 60% of the thickness s of the metal composite discs (32).

7. Squirrel-cage rotor (1) according to any one of claims 1 to 4, **characterised in that** the first metal discs (33) comprise copper or a copper alloy.

## Revendications

1. Rotor en court-circuit (1) pour une machine asynchrone doté d'au moins un paquet de tôles de rotor (11) qui présente une pluralité d'évidements (12) et d'au moins une cage de rotor formée de barres de rotor (2) électriquement conductrices qui sont insérées dans les évidements (12) du paquet de tôles de rotor (11) de telle sorte que les barres de rotor (2) présentent au niveau de leurs deux régions d'extrémité (21) une saillie par-dessus le paquet de tôles de rotor (11), et de bagues de court-circuit (3) apposées frontalement contre le paquet de tôles de rotor (11) avec une pluralité de renfoncements (31) agencés dans la région de leur circonférence extérieure et dans lesquels les régions d'extrémité (21) des barres de rotor (2) pénètrent, dans lequel
les bagues de court-circuit (3) se composent respectivement d'au moins deux disques de liaison métalliques (32, 321), lesquels se composent d'au moins un premier disque métallique (33) et d'un second disque métallique (34) dans un matériau différent et relié par sa surface à celui-ci par voie de placage,
dans lequel des disques de liaison métalliques (32, 321) adjacents sont agencés au moins partiellement de telle sorte que des premiers disques métalliques (33) sont tournés les uns vers les autres et dans lequel
les barres de rotor (2) sont reliées par liaison de matière aux premiers disques métalliques (33) dans la région des renfoncements (31).

2. Rotor en court-circuit (1) selon la revendication 1, **caractérisé**
**en ce que** les barres de rotor (2) se composent au moins partiellement d'un matériau qui peut être aisément soudé avec le matériau des premiers disques métalliques (33).

3. Rotor en court-circuit (1) selon la revendication 2, **caractérisé**
**en ce que** les barres de rotor (2) se composent au moins partiellement d'un matériau dont le matériau de base est égal au matériau de base des premiers disques métalliques (33).

4. Rotor en court-circuit (1) selon l'une quelconque des revendications 1 à 3, **caractérisé**
**en ce que** des premiers disques métalliques (33) présentent au moins un chanfrein (35) au niveau de leur circonférence extérieure.

5. Rotor en court-circuit (1) selon l'une quelconque des revendications 1 à 4, **caractérisé**
**en ce que** les premiers disques métalliques (33) se composent d'aluminium ou d'un alliage d'aluminium.

6. Rotor en court-circuit (1) selon la revendication 5, **caractérisé**
**en ce que** l'épaisseur s₁ des premiers disques métalliques (33) représente au moins 60 % de l'épaisseur s des disques de liaison métalliques (32).

7. Rotor en court-circuit (1) selon l'une quelconque des revendications 1 à 4, **caractérisé**
**en ce que** les premiers disques métalliques (33) se composent de cuivre ou d'un alliage de cuivre.
